# EUROPÄISCHE PATENTSCHRIFT

(11) **EP 2 916 678 B1**
(45) Veröffentlichungstag und Bekanntmachung des Hinweises auf die Patenterteilung: **11.01.2017**
(21) Anmeldenummer: 12794180.5
(22) Anmeldetag: 10.11.2012
(51) Int. Cl.: A43B 3/24, A43B 13/36, A43B 5/00, A43B 9/00, A43B 13/12

(54) **SCHUH, INSBESONDERE SPORTSCHUH**
SHOE, IN PARTICULAR SPORTS SHOE
CHAUSSURE, NOTAMMENT CHAUSSURE DE SPORT

(43) Veröffentlichungstag der Anmeldung: 16.09.2015
(73) Patentinhaber: PUMA SE, 91074 Herzogenaurach (DE)
(72) Erfinder: SUSSMANN, Reinhold, 91443 Scheinfeld (DE); GÄNSLER, Martin, 86368 Gersthofen (DE); HIEBLINGER, Rudolf, 85579 Neubiberg (DE)
(74) Vertreter: Gosdin, Michael
(86) Internationale Anmeldenummer: PCT/EP2012/004674
(87) Internationale Veröffentlichungsnummer: WO 2014/071964

(56) Entgegenhaltungen:
- WO-A2-2008/117270
- CA-A1- 1 117 290
- US-A- 2 552 943
- US-A1- 2009 313 851

## Beschreibung

Die Erfindung betrifft einen Schuh, insbesondere einen Sportschuh, der ein Sohlenelement und ein Schuhoberteil umfasst, wobei das Sohlenelement und das Schuhoberteil dadurch zusammengehalten werden, dass ein kabelförmiges Verbindungselement durch ösen- oder rohrartige Abschnitte am Sohlenelement und am Schuhoberteil geführt ist, wobei die ösen- oder rohrartigen Abschnitte in einem seitlichen äußeren Bereich des Sohlenelements angeordnet sind und wobei die ösen- oder rohrartigen Abschnitte in einem seitlichen äußeren Bereich des Schuhoberteils angeordnet sind.

Ein solcher Schuh ist in der WO 2008/117270 A2 offenbart. Ein ähnlicher Schuh ist aus der US 2009/0313851 A1 bekannt. Hier weist das Schuhoberteil an seiner Unterseite rohrartige Abschnitte auf. Die Sohle hat an ihrer Oberseite nutartige Vertiefungen, in die die rohrartigen Abschnitte des Schuhoberteils eintauchen könnten. Zwischen zwei derartigen Vertiefungen ist ein rohrartiger Abschnitt in der Sohle ausgebildet. Wird das Schuhoberteil auf die Sohle aufgesetzt, wird so eine umlaufende Röhrenstruktur gebildet, in die ein Draht eingeführt werden kann, um Schuhoberteil und Sohle miteinander lösbar zu verbinden. Hierzu weist die Sohle im Seitenbereich einen Ein- und einen Ausführkanal für den Draht auf, der den Zugang des Drahts zu besagter Röhrenstruktur ermöglicht. Ähnliche Lösungen zeigen die CA 1 117 290 A1, die US 2 552 943 A und die DE 456 185 C.

Damit können die Sohle und das Schuhoberteil lösbar verbunden werden, wobei zum Lösen der beiden Teile der Draht über den Ein- bzw. Ausführkanal entfernt wird. Die kann zum einen genutzt werden, um zwecks Recycling die Sohle und das Schuhoberteil, die in der Regel aus unterschiedlichen Materialien bestehen, voneinander trennen zu können. Zum anderen ist es so generell möglich, das Schuhoberteil bzw. die Sohle auszuwechseln und das jeweils andere Teil weiterzuverwenden.

Nachteilig ist bei der genannten vorbekannten Lösung, dass die Herstellung insbesondere der Sohle relativ aufwändig und somit teuer ist. Weiterhin ist das Einfädeln des Verbindungsdrahts durch den Ein- bzw. Ausführkanal relativ schwierig und zeitaufwändig. Im Falle von Verschmutzungen und Zusetzen des Ein- bzw. Ausführkanals kann es überhaupt problematisch sein, Zugang zum Draht zu erhalten, um ihn zu entfernen bzw. einen neuen Draht einzuführen.

Der Erfindung liegt die **Aufgabe** zugrunde, einen Schuh der gattungsgemäßen Art so fortzubilden, dass es in einfacherer Weise möglich ist, die Verbindung zwischen Schuhoberteil und Sohle mittels des kabelförmigen Verbindungselements herzustellen und auch wieder zu lösen. Damit soll einerseits die Möglichkeit verbessert werden, den Schuh im Entsorgungsfall zu trennen, d. h. das Schuhoberteil und die Sohle voneinander zu lösen. Andererseits soll auch eine verbesserte Möglichkeit geschaffen werden, bei Bedarf das Schuhoberteil und die Sohle voneinander zu trennen und anhand des kabelförmigen Verbindungselements wieder zusammenzusetzen.

Die **Lösung** dieser Aufgabe durch die Erfindung ist dadurch gekennzeichnet, dass das Schuhoberteil zumindest abschnittsweise mindestens zweilagig ausgebildet ist und ein Außenteil und ein Innenteil aufweist, wobei das Innenteil ein Innenfutter ist und um die Unterseite des Schuhoberteils umlaufend ausgebildet ist und auf dem Sohlenelement bei verbundenem Sohlenelement und Schuhoberteil aufliegt.

Die ösen- oder rohrartigen (röhrenförmigen) Abschnitte am Sohlenelement und die ösen- oder rohrartigen Abschnitte am Schuhoberteil sind vorzugsweise bei verbundenem Sohlenelement und Schuhoberteil fluchtend - gesehen in Umfangsrichtung des Schuhs - angeordnet und entlang der Umfangserstreckung des Schuhs abwechselnd angeordnet. Die ösen- oder rohrartigen Abschnitte am Sohlenelement und die ösen- oder rohrartigen Abschnitte am Schuhoberteil bilden dabei bevorzugt eine komplementäre, geschlossene ösen- oder rohrartige Struktur über die gesamte Umfangserstreckung des Schuhs.

Die ösen- oder rohrartigen Abschnitte am Sohlenelement sind bevorzugt direkt aus dem Material des Sohlenelements an diesem angeformt.

Die ösen- oder rohrartigen Abschnitte am Sohlenelement können einen in Richtung des Außenumfangs des Schuhs verlaufenden Schlitz aufweisen, der an der nach außen vom Schuh weg gerichteten Stirnseite des ösen- oder rohrartigen Abschnitts angeordnet ist. Damit kann das Einfädeln des kabelförmigen Verbindungselements vereinfacht werden.

Die ösen- oder rohrartigen Abschnitte am Schuhoberteil können durch einen schlaufenartig abgenähten Abschnitt des Schuhoberteils, insbesondere des Außenteils des zweilagig ausgebildeten Schuhoberteils, gebildet werden.

Das Sohlenelement kann ein Kompositbauteil umfassen, das zumindest eine Außensohle und eine Zwischensohle aufweist. Möglich ist es aber auch, dass das Kompositbauteil nur einteilig ausgeführt ist. In diesem Falle kann die Zwischensohle auch gleichzeitig die Außensohle bilden; dabei ist dann ein entsprechend dichtes und abriebfestes Material vorteilhaft.

Sofern das Kompositbauteil aus Zwischensohle und Außensohle besteht, kommt bevorzugt ein geschäumtes Material für die Zwischensohle zum Einsatz, während die Außensohle dann eher kompakter Natur ist; sie kann aus Gummi oder Kunststoff bestehen.

Das Sohlenelement weist nach einer weiteren bevorzugten Ausführungsform der Erfindung eine Gitterrahmenstruktur auf, wobei die ösen- oder rohrartigen Abschnitte Bestandteil der Gitterrahmenstruktur sind. Die Gitterrahmenstruktur weist dabei bevorzugt eine Anzahl miteinander verbundener Gitterstangen auf. Das Sohlen-Kompositbauteil kann dabei an seiner Unterseite nutförmige Ausnehmungen aufweisen, die dem Verlauf der Gitterstangen angepasst sind, wobei die Gitterrahmenstruktur und das Kompositbauteil durch Zusammenstecken formschlüssig miteinander verbunden sind. Die Verbindung ist dabei bevorzugt nicht durch Verkleben hergestellt, sondern nur durch Form- und sich daraus ergebendem Reibschluss. Jeweils mindestens zwei Gitterstangen münden dabei bevorzugt in einen ösen- oder rohrartigen Abschnitt und legen diesen an der Gitterrahmenstruktur fest.

Die Gitterrahmenstruktur ist bevorzugt aus einem Kunststoffmaterial, insbesondere aus einem kompakten Kunststoff, hergestellt, während das Kompositbauteil aus Kunststoffmaterialien, insbesondere zumindest teilweise (wie erwähnt) aus geschäumtem Kunststoff, hergestellt ist, wobei das Kunststoffmaterial der Gitterrahmenstruktur härter ist als die Kunststoffmaterialien des Kompositbauteils.

Das kabelförmige Verbindungselement ist vorzugsweise ein zugfestes Seil, wobei das Seil vorzugsweise aus Kunststoff besteht oder Kunststoff aufweist. Die beiden Enden des kabelförmigen Verbindungselements können durch ein Klemmelement miteinander verbunden sein.

Mit der vorgeschlagenen Ausgestaltung eines Schuhs wird es in einfacher Weise möglich, das Schuhoberteil mit der Sohle lösbar zu verbinden. Die Montage der beiden Teile mittels eines Seils bzw. Kabels ist durch die definierte Lage der ösen- oder rohrartigen Abschnitte am Sohlenelement und am Schuhoberteil leicht zugänglich und das Seil bzw. Kabel leicht einführbar. Das Lösen der beiden Teile (Schuhoberteil und Sohle) ist gleichermaßen einfach möglich.

Das Schuhoberteil (Schaft) und die Sohle des Schuhs bestehen in der Regel aus unterschiedlichen Materialien, die sich im zusammengesetzten bzw. verbundenen Zustand nur sehr begrenzt im Wege des Recyclings wiederverwerten lassen bzw. die nur bedingt als Ganzes biologisch abbaubar sind.

Das vorgeschlagene Konzept erlaubt es aber in einfacher Weise, Schaft und Sohle zu verbinden bzw. auch wieder zu trennen. Die Sohle und der Schaft sind über ein kabelförmiges Verbindungselement (Sehne) über die genannten ösen- oder rohrartigen Abschnitte am Schaft und an der Sohle miteinander verbindbar bzw. verbunden. Die Sehne ist an ihren Enden lösbar verbunden.

Bei der Entsorgung des Schuhs wird die Sehne gelöst und aus dem Schuh herausgezogen; dadurch lösen sich Sohle und Schaft voneinander und können separat entsorgt werden.

In der Zeichnung sind Ausführungsbeispiele der Erfindung dargestellt. Es zeigen:
- Fig. 1: die Seitenansicht eines Schuhs, der ein Schuhoberteil und eine mit diesem verbundene Sohle aufweist,
- Fig. 2: den Schnitt A-B gemäß Fig. 1,
- Fig. 3: in perspektivischer Ansicht einen Abschnitt der Sohle im Bereich des Schnitts A-B gemäß Fig. 1,
- Fig. 4: den Schnitt C-D gemäß Fig. 1,
- Fig. 5: in perspektivischer Ansicht einen Abschnitt des Schuhs im Bereich des Schnitts C-D gemäß Fig. 1,
- Fig. 6: schematisch den Schnitt E-F gemäß Fig. 1 mit Darstellung von rohrartigen Abschnitten am Sohlenelement und am Schuhoberteil und
- Fig. 7: in perspektivischer Darstellung eine Gitterrahmenstruktur, die Bestandteil des Sohlenelements ist.

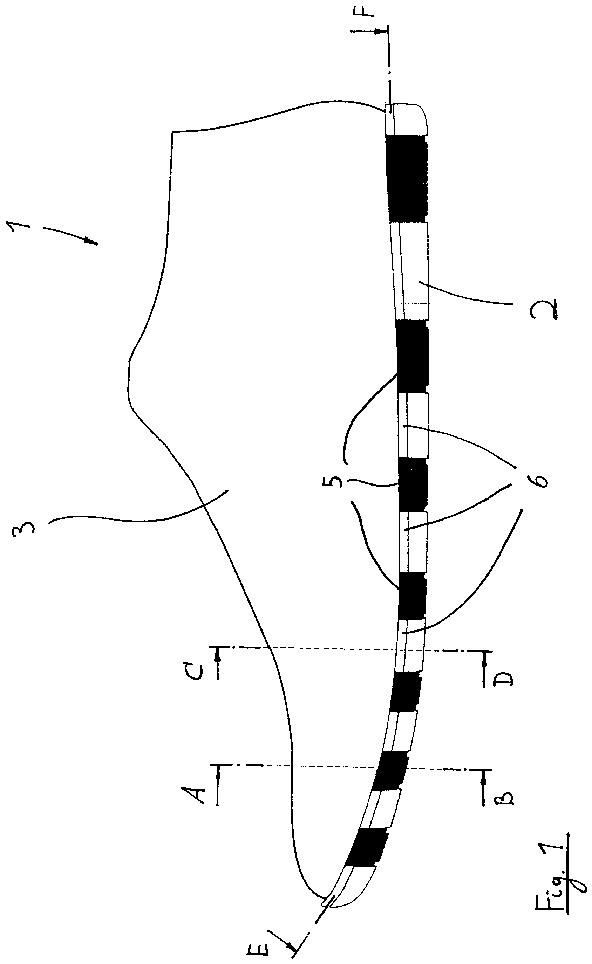

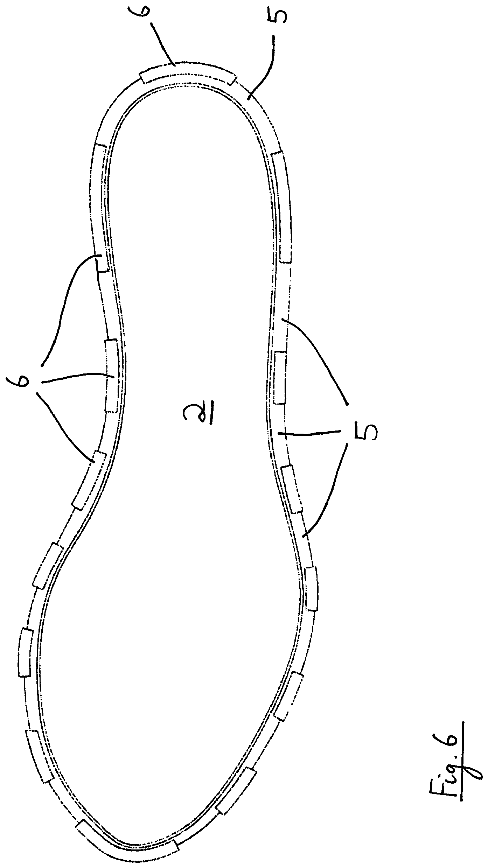

In Fig. 1 ist ein Schuh 1 in der Seitenansicht dargestellt. Er weist ein Sohlenelement 2 sowie ein Schuhoberteil (Schaft) 3 auf. Beide Teile 2 und 3 sind miteinander lösbar verbunden. Die Verbindung der beiden Teile erfolgt vorliegend durch eine Anzahl rohrartiger (rohrförmiger) Abschnitte 5 und 6, die am Sohlenelement 2 bzw. am Schuhoberteil 3 angeordnet sind. Wie anhand des Schnitts E-F gesehen werden kann, der in Fig. 6 dargestellt ist, ergänzen sich die Abschnitte 5 des Sohlenelements 2 und 6 des Schuhoberteils 3 komplementär so, dass eine geschlossen umlaufende rohrförmige Struktur vorliegt, die den gesamten Umfang des Schuhs 1 umgibt, wenn das Sohlenelement 2 und das Schuhoberteil 3 zusammengefügt werden, wie es dem bestimmungsgemäßen Zustand des Schuhs 1 entspricht. In diese rohrförmige Struktur wird ein kabelförmiges Verbindungselement 4 (Seil) eingefädelt und so die beiden Teile 2 und 3 lösbar miteinander verbunden.

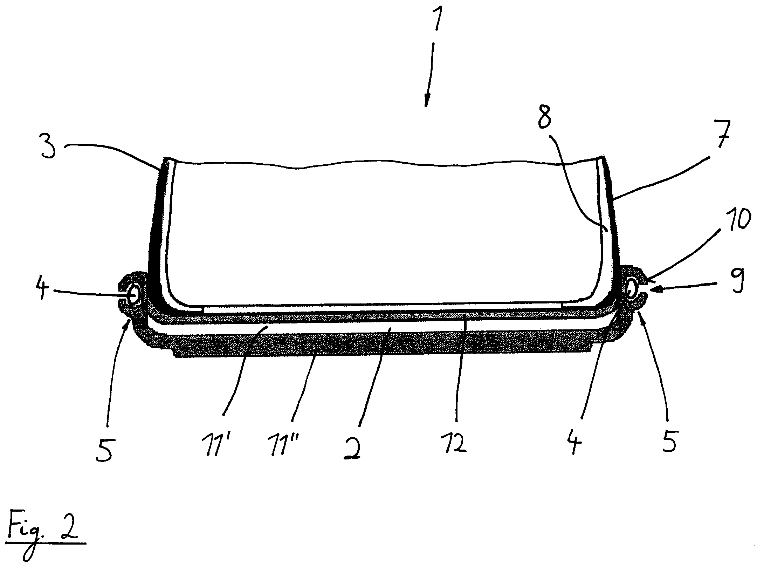

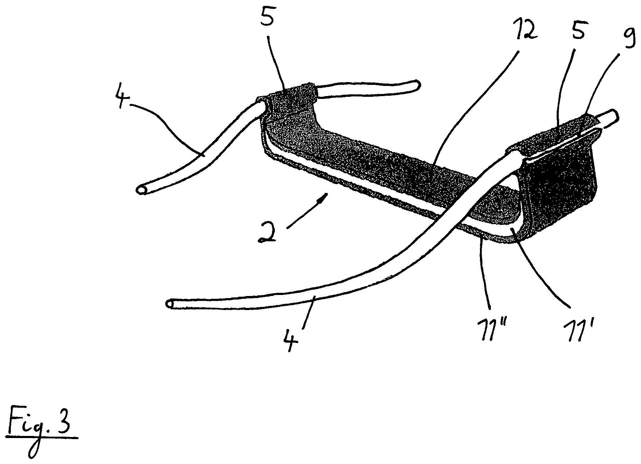

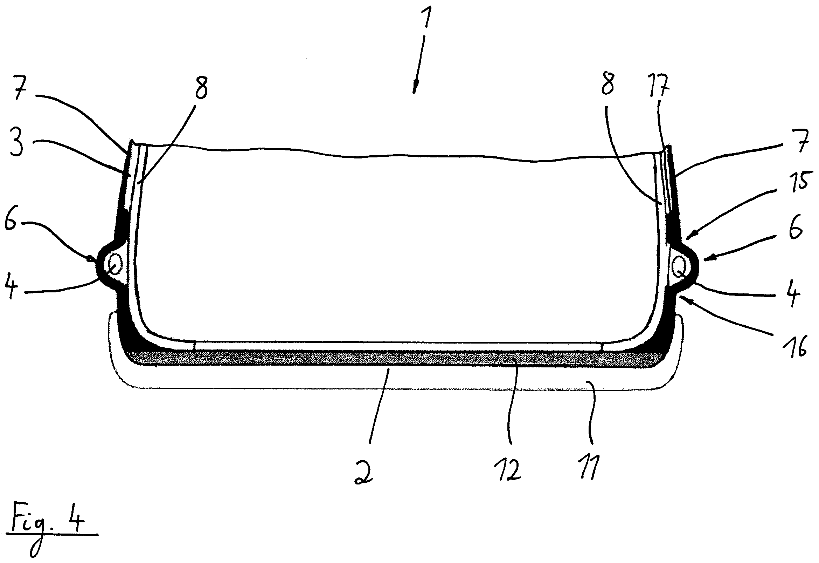

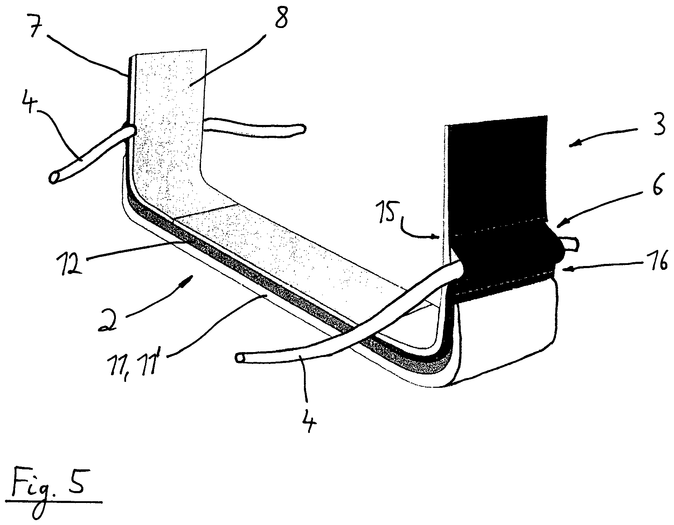

Die Ausgestaltung des Sohlenelements 2 geht aus den Figuren 2 und 3 hervor, die des Schuhoberteils 3 aus den Figuren 4 und 5.

Demnach ist die Sohle - wie aus der Zusammenschau der Figuren 1, 3 und 5 hervorgeht - aus sich in Schuhlängsrichtung abwechselnden Abschnitten aufgebaut. Im Bereich eines rohrartigen Abschnitts 5 am Sohlenelement 2 (s. Fig. 3) weist das Sohlenelement 2 eine zweiteilige Außensohle 11 mit einem ersten innenliegenden Teil 11' und einem zweiten außenliegenden Teil 11" auf. Im Bereich eines rohrartigen Abschnitts 6 am Schuhoberteil 3 (s. Fig. 5) weist das Sohlenelement 2 nur das außenliegende Teil 11" vor, was die Außensohle 11 anbelangt.

Indes erstreckt sich über die gesamte Längserstreckung des Schuhs bzw. der Sohle eine Zwischensohle 12.

Die Außensohle 11 und die Zwischensohle 12 sind dabei zu einem Kompositteil verbunden, das in seinen Randbereichen die rohrartigen Abschnitte 5 für das Einfädeln des Seils aufweist. Zwischen zwei benachbarten Abschnitten 5 befindet sich indes eine Aussparung, die zum Eintritt der Abschnitte 6 des Schuhoberteils 2 ausgebildet sind, wenn das Schuhoberteil 3 auf das Sohlenelement 2 aufgesetzt wird.

Der feste Verbund zwischen Sohlenelement 2 und Schuhoberteil 3 wird dann durch Einfädeln des Seils 4 in die Abschnitte 5, 6 hergestellt.

Das Schuhoberteil 3 ist im Ausführungsbeispiel zweilagig ausgebildet. Es hat ein Außenteil 7 und ein Innenteil 8 in Form eines Innenfutters, die miteinander verbunden (z. B. verklebt) sind. Wie am besten in Fig. 5 gesehen werden kann, ist das Außenteil 7 an zwei Nahtstellen 15 und 16 so mit dem Innenteil 8 vernäht, dass eine Schlaufe entsteht, die den rohrartigen Abschnitt 6 am Schuhoberteil 3 bildet. In diesem abgenähten Bereich kann zur Verstärkung auch ein in Umfangsrichtung verlaufendes Band (z. B. ein Lederband 17, s. Fig. 4) zwischen Außenteil 7 und Innenteil 8 eingesetzt und mit vernäht werden.

Wie in Fig. 2 und Fig. 4 gesehen werden kann, können die rohrartigen Abschnitte 5 am Sohlenelement 2 an ihrer nach außen gerichteten Stirnseite 10 mit einem in Umfangsrichtung verlaufenden Schlitz 9 versehen sein. Über den Schlitz ist es in einfacher Weise möglich, das Seil 4 beim Verbinden von Schuhoberteil 3 und Sohlenelement 2 in den rohrartigen Abschnitt 5 einzuhängen.

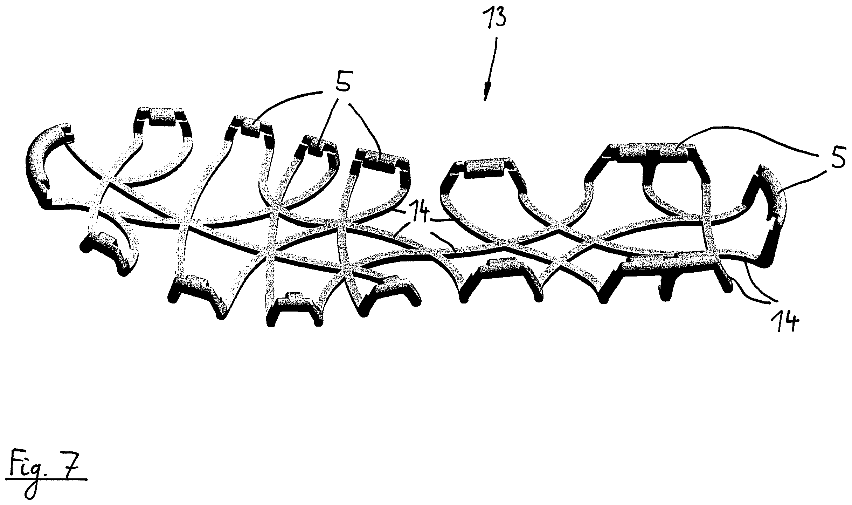

Eine weitere bevorzugte Ausführungsform ergibt sich aus Fig. 7, die eine Gitterrahmenstruktur 13 zeigt. Diese Struktur weist eine Vielzahl an Gitterstangen 14 auf, an deren Enden die rohrartigen Abschnitte 5 angeformt sind. Die Außensohle 11 bzw. Zwischensohle 12 sind in diesem Falle mit nutartigen Vertiefungen versehen, in die Gitterstangen 14 der Gitterrahmenstruktur 13 eingeführt werden (s. hierzu die Ausführungen weiter unten).

Das Sohlenelement 2 besteht nach der bevorzugten Ausführungsform also aus einer Zwischensohle 12, die vorzugsweise aus einem nachhaltigen, recyclebaren und/oder biologisch abbaubaren Kunststoff besteht. Unterhalb der Zwischensohle 12 ist die Außensohle 11 angeordnet, die abschnittsweise aus zwei Teilen 11' und 11" besteht (nämlich im Bereich der Erstreckung der ösen- oder rohrartigen Abschnitte 5 am Sohlenelement 5, s. Fig. 3) und abschnittsweise nur aus einem Teil 11' (nämlich im Bereich der Erstreckung der ösen- oder rohrartigen Abschnitte 6 am Schuhoberteil 3, s. Fig. 5). Es ergibt sich ein äußeres Erscheinungsbild des Schuhs 1, wie es aus Fig. 1 hervorgeht.

Die Gitterrahmenstruktur 13 (Lamellenstruktur) ist Bestandteil des Sohlenelements 2 und ist in die Außensohle 11 bzw. auch in die Zwischensohle 12 dergestalt eingebettet, dass in die Außensohle 11 bzw. Zwischensohle 12 an der Unterseite nutförmige Vertiefungen eingebracht (beim Spritzgießen der Teil eingeformt) sind, die dem Verlauf der Gitterstangen 14 der Gitterrahmenstruktur 13 entsprechen. Die Gitterrahmenstruktur 13 kann somit formschlüssig mit der Zwischen- und Außensohle 11, 12 zusammengesteckt werden. Dabei ergibt sich durch die Breitenabmessungen der Gitterstangen bzw. der nutförmigen Vertiefungen und deren Tolerierung zueinander auch eine reibschlüssige Verbindung.

Die nutförmigen Vertiefungen erlauben also ein passgenaues Eindrücken der Gitterstruktur mit ihren Gitterstangen 14 in die Außen- bzw. Zwischensohle. Dies erfolgt vorzugsweise ohne Einsatz eines Klebstoffs.

Die Gitterstruktur 13 erstreckt sich ganz oder auch nur teilweise über den Boden der Zwischensohle 12 bzw. des Schuhs bis in den Seitenbereich des Schuhoberteils 3. Die Gitterrahmenstruktur 13 wird durch das kabelförmige Verbindungselement am Schuhoberteil 3 gehalten. Hierzu wird das Verbindungselement 4 abwechselnd durch die ösen- oder rohrartigen Abschnitte 5 am Sohlenelement 2 und durch die ösen- oder rohrartigen Abschnitte 6 am Schuhoberteil 3 geführt.

Die röhrenförmigen Abschnitte 5 verbinden zwei oder mehrere Gitterstangen 14. Die röhrenförmigen Abschnitte 5 sind bevorzugt nach unten oder zur vom Schuhinneren abgewandten Stirnseite 10 offen, d. h. sie weisen hier einen Schlitz 9 auf; dies erleichtert das Einführen der Sehne. Insoweit sind die Abschnitte 5 hakenartig ausgebildet; die Sehne kann dann in einfacher Weise von unten eingehängt bzw. eingehakt werden, so dass ein Einfädeln nicht erforderlich ist.

Die röhrenförmigen Abschnitte 5 am Sohlenelement 2 sind hinsichtlich ihrer Anordnung und Länge so gewählt, das auf der einen Seite eine gleichmäßige Befestigung der Gitterrahmenstruktur 13 am Schuhoberteil 3 ermöglicht wird und beim Abwinkeln des Fußes bzw. namentlich des Vorfußes kein Aufklaffen der Gitterrahmenstruktur 13 erfolgt; auf der anderen Seite soll der Fuß in seiner Flexibilität keine wesentlich Einschränkung erfahren.

Die Gitterrahmenstruktur 13 kann im Bodenbereich mit der Außensohle abschließen; vorzugsweise ist sie allerdings in den nutförmigen Vertiefungen in der Außensohle bzw. Zwischensohle etwas zurückversetzt, um einen Abrieb beim Laufen zu vermeiden.

Die Gitterrahmenstruktur 13 ist aus einem härteren Material als die Außensohle bzw. Zwischensohle gefertigt, insbesondere um eine zu starke Stauchung bzw. ein zu starkes Durchbiegen der röhrenförmigen Abschnitte 5 zu verhindern, was zu einem Verlust der Verbindung mit dem Schaft führen könnte.

Die Außensohle 11 bzw. Zwischensohle 12 ist vorzugsweise aus einem geschäumten und somit dämpfenden Material hergestellt. Dessen Dichte liegt bevorzugt zwischen 0,15 und 0,75 g/cm³.

Indes besteht die Gitterrahmenstruktur 13 und somit die röhrenförmigen Abschnitte 5 bevorzugt aus kompaktem Kunststoff, vorzugsweise aus recyclebarem oder biologisch abbaubarem Material. Für die Außen- und Zwischensohle kommen bevorzugt dämpfende Materialien wie EVA, PUR, PE in Frage, aber auch wieder vorzugsweise recyclebare oder biologisch abbaubare Materialien.

Der Schaft (Schuhoberteil) ist vorzugsweise gestrobelt oder ein Vollmokassin. Der Schaft besitzt die ösen- oder rohrartige Abschnitte 6, die das kabelförmige Verbindungselement 4 aufnehmen können.

Das kabelförmige Verbindungselement kann aus Metall oder aus Kunststoff bestehen. Bevorzugt sind Aramidfasern, aber auch Schnüre aus natürlichen Fasern, die nur geringfügig dehnbar sind.

Die Enden der Sehne können nach dem Einfädeln bzw. Einhaken lösbar mittels einer Verbindungsklemme verbunden werden.

Oben erläutert ist im Ausführungsbeispiel die Verbindungstechnik, bei der sowohl am Sohlenelement 2 als auch am Schuhoberteil 3 röhrenförmige Abschnitte 5 bzw. 6 angeordnet sind, die in Umfangsrichtung eine komplementäre, geschlossene Struktur bilden, so dass in dieser das Verbindungselement 4 (Seil) geführt wird, das dann im zusammengebauten Zustand des Schuhs 1 nicht mehr sichtbar ist.

Es bestehen aber auch andere Möglichkeiten, die in den Ausführungsbeispielen nicht illustriert sind, die aber erfindungsgemäß genauso nutzbar sind, wenn die Abschnitte 6 am Schuhoberteil 3 als reine Ösen ausgebildet sind.

So kann nach einer anderen, nicht dargestellten Lösung vorgesehen werden, dass im Schuhoberteil 3 Ösen (Löcher) in Höhe der röhrenförmigen Abschnitte 5 am Sohlenelement 2 eingebracht sind. Das Verbindungselement (Seil) wird dann durch besagte Ösen im Schuhoberteil 3 und die röhrenförmigen Abschnitte 5 am Sohlenelement 2 ein- bzw. auch wieder ausgefädelt.

Eine andere Lösung stellt darauf ab, dass im Schuhoberteil 3 in dem Bereich, in dem gemäß Fig. 4 die Abschnitte 6 vorgesehen sind, Aussparungen (längliche Löcher) eingebracht sind. In diese Aussparungen können separate Leder- oder Kunststoffteile von innen eingesetzt werden, die nach außen aus der äußeren Oberfläche des Schuhoberteils 3 herausragen und einen ösen- bzw. rohrartigen Abschnitt bilden, durch den das Seil eingefädelt werden kann. Die ösen- bzw. rohrartigen Abschnitte 6 können dabei im Schnitt halbkreisförmig ausgebildet sein und so mit den ösen- oder rohrartigen Abschnitten 5 am Sohlenelement 2 wiederum eine komplementäre, umlaufende Form bilden. Diese Lösung hat den Vorteil, dass kein Ein- und Ausfädeln der Sehne nötig ist, sondern nur ein abwechselndes Durchfädeln der Sehne von außen.

Eine weitere Lösung stellt darauf ab, dass das Schuhoberteil 3 zweiteilig ausgebildet ist, d. h. es weist einen oberen Teil auf, der das eigentliche Schuhoberteil bildet, und einen unteren Teil - ausgebildet als umlaufendes Band -, der mit entsprechenden Schlaufen (röhrenförmigen Abschnitten) versehen ist; beide Schaftteile werden dann verbunden.

### Bezugszeichenliste:

- 1: Schuh
- 2: Sohlenelement
- 3: Schuhoberteil
- 4: kabelförmiges Verbindungselement
- 5: ösen- oder rohrartiger Abschnitt am Sohlenelement
- 6: ösen- oder rohrartiger Abschnitt am Schuhoberteil
- 7: Außenteil des Schuhoberteils
- 8: Innenteil des Schuhoberteils (Innenfutter)
- 9: Schlitz
- 10: Stirnseite
- 11: Außensohle
- 11': erster Teil der Außensohle
- 11": zweiter Teil der Außensohle
- 12: Zwischensohle
- 13: Gitterrahmenstruktur
- 14: Gitterstange
- 15: Nahtstelle
- 16: Nahtstelle
- 17: Lederband

## Patentansprüche

1. Schuh (1), insbesondere Sportschuh, der ein Sohlenelement (2) und ein Schuhoberteil (3) umfasst, wobei das Sohlenelement (2) und das Schuhoberteil (3) dadurch zusammengehalten werden, dass ein kabelförmiges Verbindungselement (4) durch ösen- oder rohrartige Abschnitte (5, 6) am Sohlenelement (2) und am Schuhoberteil (3) geführt ist, wobei die ösen- oder rohrartigen Abschnitte (5) in einem seitlichen äußeren Bereich des Sohlenelements (2) angeordnet sind und wobei die ösen- oder rohrartigen Abschnitte (6) in einem seitlichen äußeren Bereich des Schuhoberteils (3) angeordnet sind,
**dadurch gekennzeichnet,**
**dass** das Schuhoberteil (3) zumindest abschnittsweise mindestens zweilagig ausgebildet ist und ein Außenteil (7) und ein Innenteil (8) aufweist, wobei das Innenteil (8) ein Innenfutter ist und um die Unterseite des Schuhoberteils (3) umlaufend ausgebildet ist und auf dem Sohlenelement (2) bei verbundenem Sohlenelement (2) und Schuhoberteil (3) aufliegt.

2. Schuh nach Anspruch 1, **dadurch gekennzeichnet, dass** die ösen- oder rohrartigen Abschnitte (5) am Sohlenelement (2) und die ösen- oder rohrartigen Abschnitte (6) am Schuhoberteil (3) bei verbundenem Sohlenelement (2) und Schuhoberteil (3) fluchtend angeordnet sind und entlang der Umfangserstreckung des Schuhs (1) abwechselnd angeordnet sind.

3. Schuh nach Anspruch 2, **dadurch gekennzeichnet, dass** die ösen- oder rohrartigen Abschnitte (5) am Sohlenelement (2) und die ösen- oder rohrartigen Abschnitte (6) am Schuhoberteil (3) eine komplementäre und weitgehend geschlossene ösen- oder rohrartige Struktur über die gesamte Umfangserstreckung des Schuhs (1) bilden.

4. Schuh nach einem der Ansprüche 1 bis 3, **dadurch gekennzeichnet, dass** die ösen- oder rohrartigen Abschnitte (5) am Sohlenelement (2) direkt aus dem Material des Sohlenelements (2) an diesem angeformt sind.

5. Schuh nach einem der Ansprüche 1 bis 4, **dadurch gekennzeichnet, dass** die ösen- oder rohrartigen Abschnitte (5) am Sohlenelement (2) einen in Richtung des Außenumfangs des Schuhs (1) verlaufenden Schlitz (9) aufweist, der an der nach außen vom Schuh weg gerichteten Stirnseite (10) des ösen- oder rohrartigen Abschnitts (5) angeordnet ist.

6. Schuh nach einem der Ansprüche 1 bis 5, **dadurch gekennzeichnet, dass** die ösen- oder rohrartigen Abschnitte (6) am Schuhoberteil (3) durch einen schlaufenartig abgenähten Abschnitt des Schuhoberteils (3), insbesondere des Außenteils (7) des zweilagig ausgebildeten Schuhoberteils (3), gebildet wird.

7. Schuh nach einem der Ansprüche 1 bis 6, **dadurch gekennzeichnet, dass** das Sohlenelement (2) ein Kompositbauteil umfasst, das zumindest eine Außensohle (11) und eine Zwischensohle (12) aufweist.

8. Schuh nach einem der Ansprüche 1 bis 7, **dadurch gekennzeichnet, dass** das Sohlenelement (2) eine Gitterrahmenstruktur (13) aufweist, wobei die ösen- oder rohrartigen Abschnitte (5) Bestandteil der Gitterrahmenstruktur (13) sind.

9. Schuh nach Anspruch 8, **dadurch gekennzeichnet, dass** die Gitterrahmenstruktur (13) eine Anzahl miteinander verbundener Gitterstangen (14) aufweist.

10. Schuh nach Anspruch 7 und 9, **dadurch gekennzeichnet, dass** das Kompositbauteil an seiner Unterseite nutförmige Ausnehmungen aufweist, die dem Verlauf der Gitterstangen (14) angepasst sind, wobei die Gitterrahmenstruktur (13) und das Kompositbauteil (11, 12) durch Zusammenstecken formschlüssig miteinander verbunden sind.

11. Schuh nach Anspruch 9 oder 10, **dadurch gekennzeichnet, dass** jeweils mindestens zwei Gitterstangen (14) in einen ösen- oder rohrartigen Abschnitt (5) münden und diesen an der Gitterrahmenstruktur (13) festlegen.

12. Schuh nach Anspruch 7 und 8, **dadurch gekennzeichnet, dass** die Gitterrahmenstruktur (13) aus einem Kunststoffmaterial, insbesondere aus einem kompakten Kunststoff, hergestellt ist und dass das Kompositbauteil (11, 12) aus Kunststoffmaterialien, insbesondere zumindest teilweise aus geschäumtem Kunststoff, hergestellt ist, wobei das Kunststoffmaterial der Gitterrahmenstruktur (13) härter ist als die Kunststoffmaterialien des Kompositbauteils (11, 12).

13. Schuh nach einem der Ansprüche 1 bis 12, **dadurch gekennzeichnet, dass** das kabelförmige Verbindungselement (4) ein zugfestes Seil ist, wobei das Seil vorzugsweise aus Kunststoff besteht oder Kunststoff aufweist.

14. Schuh nach Anspruch 13, **dadurch gekennzeichnet, dass** die beiden Enden des kabelförmigen Verbindungselements (4) durch ein Klemmelement miteinander verbunden sind.

## Claims

1. Shoe (1), especially sports shoe, which comprises a sole element (2) and a shoe upper part (3), wherein the sole element (2) and the shoe upper part (3) are thereby held together that a wire-like connection element (4) is guided through eye- or tube-like sections (5, 6) at the sole element (2) and at the shoe upper part (3), wherein the eye- or tube-like sections (5) are arranged in a lateral outer region of the sole element (2) and wherein the eye- or tube-like sections (6) are arranged in a lateral outer region of the shoe upper part (3),
**characterized in**
**that** the shoe upper part (3) is designed at least partially as an at least two-layer structure and comprises an outer part (7) and an inner part (8), wherein the inner part (8) is a lining and is designed circumferential around the bottom side of the shoe upper part (3) and lays on the sole element (2) at connected sole element (2) and shoe upper part (3).

2. Shoe according to claim 1, **characterized in that** the eye- or tube-like sections (5) at the sole element (2) and the eye- or tube-like sections (6) at the shoe upper part (3) are arranged aligned at connected sole element (2) and shoe upper part (3) and are arranged alternating along the circumference of the shoe (1).

3. Shoe according to claim 2, **characterized in that** the eye- or tube-like sections (5) at the sole element (2) and the eye- or tube-like sections (6) at the shoe upper part (3) form a complementary and substantial closed eye- or tube-like structure along the whole circumference of the shoe (1).

4. Shoe according to one of claims 1 to 3, **characterized in that** the eye- or tube-like sections (5) at the sole element (2) are formed directly from the material of the sole element (2) at the same.

5. Shoe according to one of claims 1 to 4, **characterized in that** the eye- or tube-like sections (5) at the sole element (2) comprise a slit (9) which slit (9) runs in the direction of the outer circumference of the shoe (1) and which slit (9) is arranged at the face side (10) of the eye- or tube-like section (5) which is directed outside away from the shoe.

6. Shoe according to one of claims 1 to 5, **characterized in that** the eye- or tube-like sections (6) at the shoe upper part (3) are formed by a loop-like stitched section of the shoe upper part (3), especially of the outer part (7) of the two-layer formed shoe upper part (3).

7. Shoe according to one of claims 1 to 6, **characterized in that** the sole element (2) comprises a composite part which comprises at least an outer sole (11) and a midsole (12).

8. Shoe according to one of claims 1 to 7, **characterized in that** the sole element (2) comprises a lattice frame structure (13), wherein the eye- or tube-like sections (5) are parts of the lattice frame structure (13).

9. Shoe according to claim 8, **characterized in that** the lattice frame structure (13) comprises a number of lattice rods (14) which are connected with another.

10. Shoe according to claim 7 and 9, **characterized in that** the composite part comprises groove-like recesses at its bottom side which are adapted to the run of the lattice rods (14), wherein the lattice frame structure (13) and the composite part (11, 12) are connected with another form-fitted by sticking together.

11. Shoe according to claim 9 or 10, **characterized in that** respectively at least two lattice rods (14) lead in an eye- or tube-like section (5) and fix the same at the lattice frame structure (13).

12. Shoe according to claim 7 and 8, **characterized in that** the lattice frame structure (13) is produced from a plastic material, especially from a compact plastic material, and that the composite part (11, 12) is produced from plastic materials, especially at least partially from foamed plastic, wherein the plastic material of the lattice frame structure (13) is harder than the plastic materials of the composite part (11, 12).

13. Shoe according to one of claims 1 to 12, **characterized in that** the wire-like connection element (4) is a tensile strength rope, wherein the rope consists preferably from plastic material or comprises plastic material.

14. Shoe according to claim 13, **characterized in that** the two ends of the wire-like connection element (4) are connected together by a clamping element.

## Revendications

1. Chaussure (1), en particulier chaussure de sport, qui comprend un élément formant semelle (2) et une tige de chaussure (3), l'élément formant semelle (2) et la tige de chaussure (3) étant tenus ensemble par le fait qu'un élément de liaison (4) en forme de câble est guidé en passant par des segments en forme d'oeillets ou de tubes (5, 6) contre l'élément formant semelle (2) et contre la tige de chaussure (3), les segments en forme d'oeillets ou de tubes (5) étant disposés dans une zone extérieure latérale de l'élément formant semelle (2), et les segments en forme d'oeillets ou de tubes (6) étant disposés dans une zone extérieure latérale de la tige de chaussure (3), **caractérisée en ce que** la tige de chaussure (3) est, au moins par segments, conçue au moins bicouche et comprend une pièce extérieure (7) et une pièce intérieure (8), la pièce intérieure (8) étant une doublure et étant conçue de façon à entourer le côté inférieur de la tige de chaussure (3), et s'appuyant sur l'élément formant semelle (2) quand l'élément formant semelle (2) et la tige de chaussure (3) sont reliés.

2. Chaussure selon la revendication 1, **caractérisée en ce que** les segments en forme d'oeillets ou de tubes (5) sont disposés en alignement contre l'élément formant semelle (2), et les segments en forme d'oeillets ou de tubes (6) sont disposés en alignement sur la tige de chaussure (3), quand l'élément formant semelle (2) et la tige de chaussure (3) sont reliés, et sont disposés en alternance le long de l'extension périphérique de la chaussure (1).

3. Chaussure selon la revendication 2, **caractérisée en ce que** les segments en forme d'oeillets ou de tubes (5) contre l'élément formant semelle (2), et les segments en forme d'oeillets ou de tubes (6) contre la tige de chaussure (3), forment sur la totalité de l'extension périphérique de la chaussure (1) une structure en forme d'oeillets ou de tubes, complémentaire et essentiellement fermée.

4. Chaussure selon l'une des revendications 1 à 3, **caractérisée en ce que** les segments en forme d'oeillets ou de tubes (5) sont, contre l'élément formant semelle (2), directement à partir du matériau de l'élément formant semelle (2), contre ce dernier.

5. Chaussure selon l'une des revendications 1 à 4, **caractérisée en ce que** les segments en forme d'oeillets ou de tubes (5) contre l'élément formant semelle (2) comprennent une rainure (9), courant dans la direction de la périphérie extérieure de la chaussure (1), rainure qui est disposée contre la face avant (10), dirigée vers l'extérieur à partir de la chaussure, du segment en forme d'oeillets ou de tubes (5).

6. Chaussure selon l'une des revendications 1 à 5, **caractérisée en ce que** les segments en forme d'oeillets ou de tubes (6) contre la tige de chaussure (3) sont formés par un segment cousu en forme de boucle de la tige de chaussure (3), en particulier de la pièce extérieure (7) de la tige de chaussure (3) conçue bicouche.

7. Chaussure selon l'une des revendications 1 à 6, **caractérisée en ce que** l'élément formant semelle (2) comprend un composant composite, qui comprend au moins une semelle extérieure (11) et une semelle intercalaire (12) .

8. Chaussure selon l'une des revendications 1 à 7, **caractérisée en ce que** l'élément formant semelle (2) comprend une structure spatiale (13), les segments en forme d'oeillets ou de tubes (5) étant des constituants de la structure spatiale (13).

9. Chaussure selon la revendication 8, **caractérisée en ce que** la structure spatiale (13) comprend un certain nombre de barres (14) reliées les unes aux autres.

10. Chaussure selon les revendications 7 et 9, **caractérisée en ce que** le composant composite comprend sur sa face inférieure des évidements en forme d'encoches, qui sont adaptés au tracé des barres (14), la structure spatiale (13) et le composant composite (11, 12) étant reliés l'un à l'autre par une liaison avec correspondance de forme par emboîtement.

11. Chaussure selon la revendication 9 ou 10, **caractérisée en ce qu'**au moins deux barres (14) débouchent dans chaque segment en forme d'oeillets ou de tubes (5), et fixent ce dernier à la structure spatiale (13).

12. Chaussure selon les revendications 7 et 8, **caractérisée en ce que** la structure spatiale (13) est fabriquée à partir d'un matériau plastique, en particulier d'un matériau plastique compacte, et que le composant composite (11, 12) est fabriqué en des matériaux plastiques, en particulier au moins partiellement un plastique expansé, le matériau plastique de la structure spatiale (13) étant plus rigide que les matériaux plastiques du composant composite (11, 12).

13. Chaussure selon l'une des revendications 1 à 12, **caractérisée en ce que** l'élément de liaison (4) en forme de câble est une corde résistante à la traction, la corde étant de préférence constituée d'un plastique ou comportant un plastique.

14. Chaussure selon la revendication 13, **caractérisée en ce que** les deux extrémités de l'élément de liaison (4) en forme de câble sont reliées l'une à l'autre par un élément de serrage.
